# EUROPEAN PATENT APPLICATION

(11) **EP 4 488 738 A1**
(43) Date of publication of application: **08.01.2025**
(21) Application number: 22929770.0
(22) Date of filing: 02.03.2022
(51) Int. Cl.: G02B 7/28, G02B 21/00

(54) **FOCUS ADJUSTMENT METHOD, PROGRAM, AND DEVICE**

(71) Applicant: NIKON CORPORATION, Tokyo 140-8601 (JP)
(72) Inventor: HOSHINO, Tetsuro, Tokyo 140-8601 (JP); TAMOTO, Ryo, Tokyo 140-8601 (JP)
(74) Representative: Hoffmann Eitle
(86) International application number: PCT/JP2022/008931
(87) International publication number: WO 2023/166624

(57) **Abstract**

A focus adjustment method includes: obtaining two first microscopic images by performing image capturing of a first subject using a microscope including an objective lens and using a stop brought to a size smaller than a fully open state, the image capturing being performed a plurality of times while changing a position of the objective lens relative to the first subject in an optical axis direction at a predetermined interval; by inputting the two first microscopic images to a learned model configured to estimate a direction of movement of a focus of the objective lens relative to an in-focus position of the first subject, estimating the direction of movement; and processing to move the focus relative to the subject based on the direction of movement.

## Description

### [Technical Field]

The present invention relates to a focus adjustment method, a program, and an apparatus.

### [Background Art]

There is conventionally known a method for calculating a focus position based on an image obtained with a microscope (PTL 1).

### [Citation List]

### [Patent Literature]

[PTL 1] Japanese Patent Application Publication No. 2020-060602

### [Summary of Invention]

### [Technical Problem]

A technique of the present disclosure provides a novel focus adjustment method.

### [Solution to Problem]

As one aspect of the disclosure, a focus adjustment method includes: obtaining two first microscopic images by performing image capturing of a first subject using a microscope including an objective lens and using a stop brought to a size smaller than a fully open state, the image capturing being performed a plurality of times while changing a position of the objective lens relative to the first subject in an optical axis direction at a predetermined interval; by inputting the two first microscopic images to a learned model configured to estimate a direction of movement of a focus of the objective lens relative to an in-focus position of the first subject, estimating the direction of movement; and processing to move the focus relative to the subject based on the direction of movement.

### [Brief Description of Drawings]

[Fig. 1] Fig. 1 is an overall configuration diagram of an information processing system according to an embodiment.
[Fig. 2] Fig. 2 is a diagram illustrating a hardware configuration of an information processing apparatus.
[Fig. 3] Fig. 3 is a diagram illustrating a functional configuration of a server.
[Fig. 4] Fig. 4 is a diagram illustrating the configuration of a learner.
[Fig. 5] Fig. 5 is a diagram illustrating the configurations of datasets.
[Fig. 6] Fig. 6 is a flowchart illustrating processing according to the embodiment.
[Fig. 7] Fig. 7 is a diagram illustrating the relation between an aperture stop and the depth of focus.
[Fig. 8] Fig. 8 is a diagram illustrating an image captured by a microscopic apparatus and divided images.
[Fig. 9] Fig. 9 is a diagram illustrating images used in learning processing and estimation processing.
[Fig. 10] Fig. 10 is a diagram illustrating the operation of an objective lens in the estimation processing.
[Fig. 11] Fig. 11 is a diagram illustrating the relation between images used in the estimation processing and estimation results.

### [Description of Embodiments]

The present disclosure is described below with reference to the drawings, using an embodiment thereof.

### [Configuration]

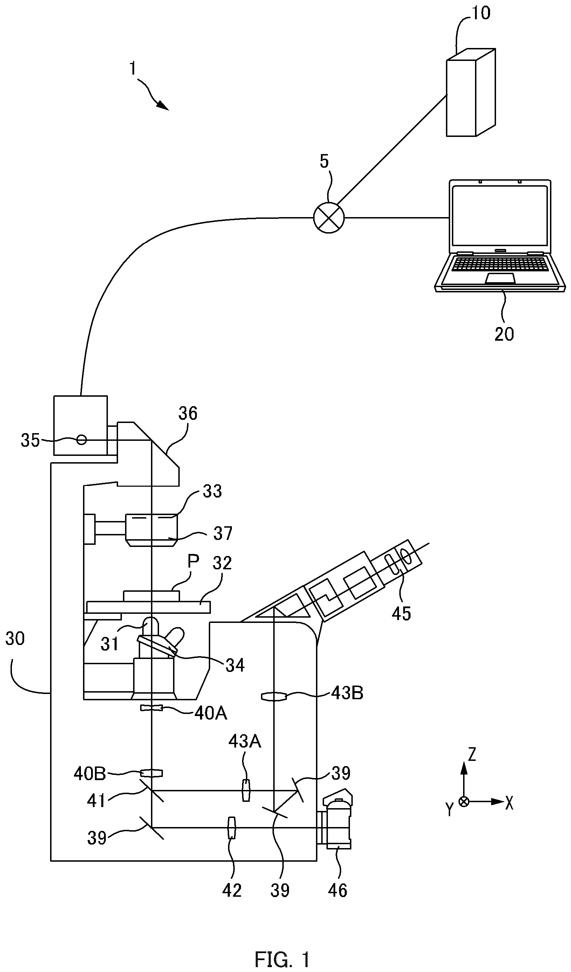

Fig. 1 illustrates the configuration of an information processing system 1 according to an embodiment of the present invention. The information processing system 1 includes a server 10, a terminal 20, and a microscope apparatus 30. The server 10, the terminal 20, and the microscope apparatus 30 are coupled so that data can be transmitted and received between them via a network 5.

The network 5 is a wireless or wired communication means and is, for example, the Internet, a WAN (Wide Area Network), a LAN (Local Area Network), a public telecommunication network, a dedicated line, or the like. Note that although the information processing system 1 of the present embodiment is configured by a plurality of information management apparatuses, the present invention does not limit the number of these apparatuses. Thus, the information processing system 1 can be configured by one or more apparatus as long as the one or more apparatuses include the following functions.

The server 10 and the terminal 20 perform the following processing: control of the microscope apparatus 30, obtainment of an image captured by the microscope apparatus 30, and edit and analysis of an image.

The microscope apparatus 30 is an apparatus that performs image capturing (or imaging) of biological tissue as a subject using a microscope. A cell is assumed as an example of a subject. The microscope apparatus 30 includes, as illustrated in Fig. 1, objective lenses 31, a stage 32, an aperture stop 33, a revolver 34 that supports a plurality of the objective lenses 31, a light source 35, a reflective mirror 36, a condenser lens 37, an eyepiece lens 45, and an imager 46 (including a CCD sensor, a CMOS sensor, and the like) and is capable of performing image capturing of a biological tissue sample placed on each of wells W1, W2 of a well plate P.

In addition, the microscope apparatus 30 includes reflective mirrors 39, positive and negative lenses 40A, 40B, a half-mirror 41, a lens 42, and relay optical systems 43A, 43B, and these members form an optical path along which light from the objective lens 31 is guided to the eyepiece lens 45 and the imager 46.

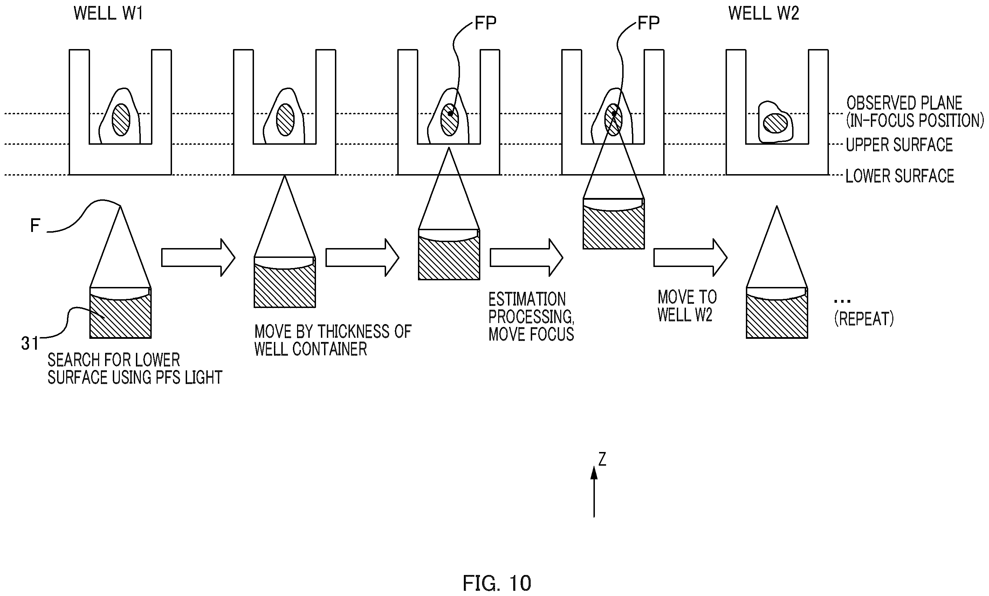

The microscope apparatus 30 is capable of changing the distance between focus F (Fig. 10) of the objective lens 31 and the sample placed on the well plate P on the stage 32 by moving the objective lens 31 relative to the stage 32 along the Z-axis extending in the vertical direction to change the position of the objective lens 31 in the Z-axis direction (referred to as a Z-position). In addition, the microscope apparatus 30 can move the stage 32 along the X-axis and the Y-axis which extend horizontally and are orthogonal to each other. These X-, Y-, Z-position signals are outputted as position signals by, e.g., encoders of drivers for the objective lens 31 and the stage 32, which are not illustrated, and are stored in a storage device.

Note that because the Z-position can be changed by changing the relative positions of the objective lens 31 and the stage 32, the stage 32 may be moved in the Z-axis direction.

The aperture stop 33 is disposed on the optical path, between the sample and the light source 35. In the present embodiment, the aperture stop 33 is set above the condenser lens 37.

A pencil of light emitted from the light source 35 (such as a tungsten lamp) is applied to the sample via the reflective mirror 36, the aperture stop 33, and the condenser lens 37. The light source 35 may be a point light source.

Light from the sample passes through the objective lens 31 and the lenses 40A, 40B and is then divided into two parts by the half-mirror 41 and guided to a visual optical path and an image capturing optical path.

The light on the visual optical path is guided to the eyepiece lens 45 via the reflective mirrors 39 and the relay optical systems 43A, 43B. The light on the image capturing optical path passes through the lens 42 and is led to the imager 46 and imaged.

The microscope apparatus 30 according to the present embodiment includes an optical microscope and obtains a brightfield image. Examples of the image obtained by the optical microscope include a phase-contrast image, a brightfield image, a differential interference image, a confocal microscopic image, a super-resolving microscopic image, a fluorescence image, and a stained image used for pathological diagnoses or the like.

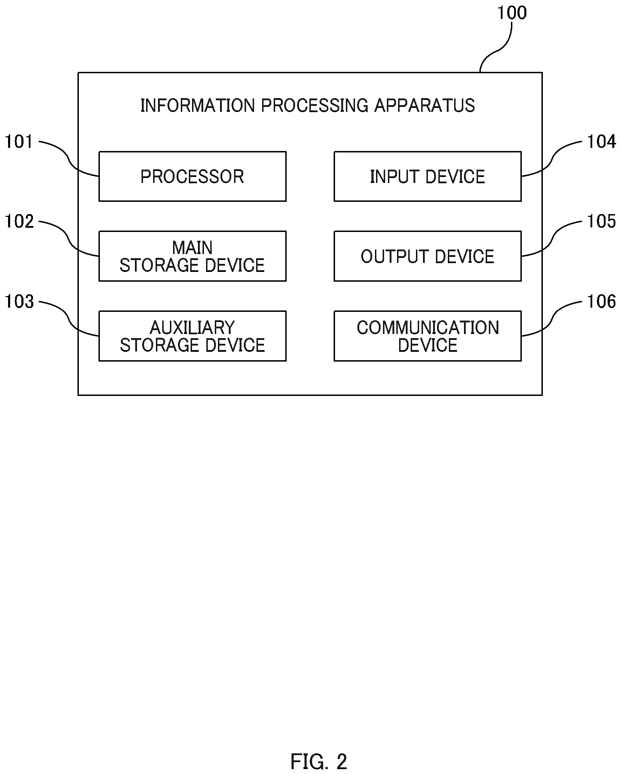

Fig. 2 is an example of hardware used to implement the server 10 and the terminal 20 (hereinafter referred to as an "information processing apparatus 100"). As illustrated in Fig. 2, the information processing apparatus 100 includes a processor 101, a main storage device 102, an auxiliary storage device 103, an input device 104, an output device 105, and a communication device 106. They are communicatively coupled via a communication means (not illustrated) such as a bus.

Note that the server 10 does not necessarily have to be configured by hardware entirely, and the entirety or part of the configuration may be implemented by, for example, a virtual resource such as a cloud server in a cloud system.

The processor 101 is configured using a CPU (Central Processing Unit), a MPU (Micro Processing Unit), or the like. The functions of the server 10 or the terminal 20 are implemented when the processor 101 reads and executes programs stored in the main storage device 102.

The main storage device 102 is a device that stores programs and data and is a ROM (Read-Only Memory), a RAM (Random-Access Memory), a non-volatile semiconductor memory (NVR_AM (Non-Volatile RAM)), or the like. The auxiliary storage device 103 is any of various types of non-volatile memory (NVR_AM) such as an SSD (Solid-State Drive) or a SD memory card, a hard disk drive, an optical storage device (such as a CD (Compact Disc) or a DVD (Digital Versatile Disc)), a storage region in a cloud server, or the like.

The input device 104 is an interface for receiving input of information and is, for example, a keyboard, a mouse, a touch panel, a card reader, a voice input device (such as a microphone), a voice recognition device, or the like. The image processing apparatus 100 may be configured to receive input of information from a different apparatus via the communication device 106.

The output device 105 is an interface for outputting various kinds of information and is, for example, an image display device (such as a liquid crystal monitor, an LCD (Liquid Crystal Display), or a graphics card), a printing apparatus etc.), an audio output device (such as a speaker), a voice synthesis device, or the like. The image processing apparatus 100 may be configured to output information to a different apparatus via the communication device 106. The output device 105 corresponds to a display unit in the present invention.

The communication device 106 is a wired or wireless communication interface for implementing communications with a different apparatus via the network 5 and is, for example, a NIC (Network Interface Card), a wireless communication module, a USB (Universal Serial Interface) module, a serial communication module, or the like.

### [Functional Configuration]

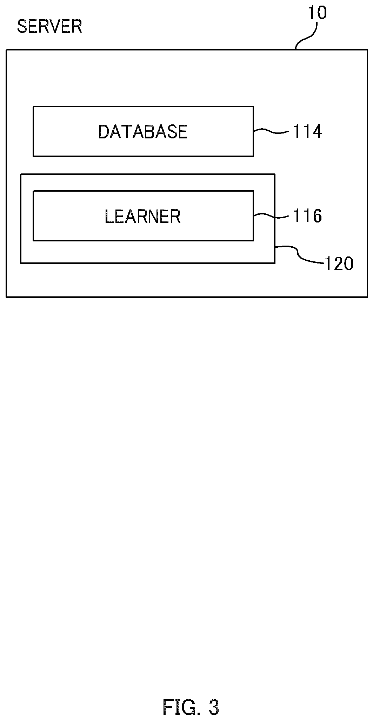

Fig. 3 illustrates the main functional configuration of the server 10. As illustrated in Fig. 3, the server 10 includes a database 114 and a management part 120.

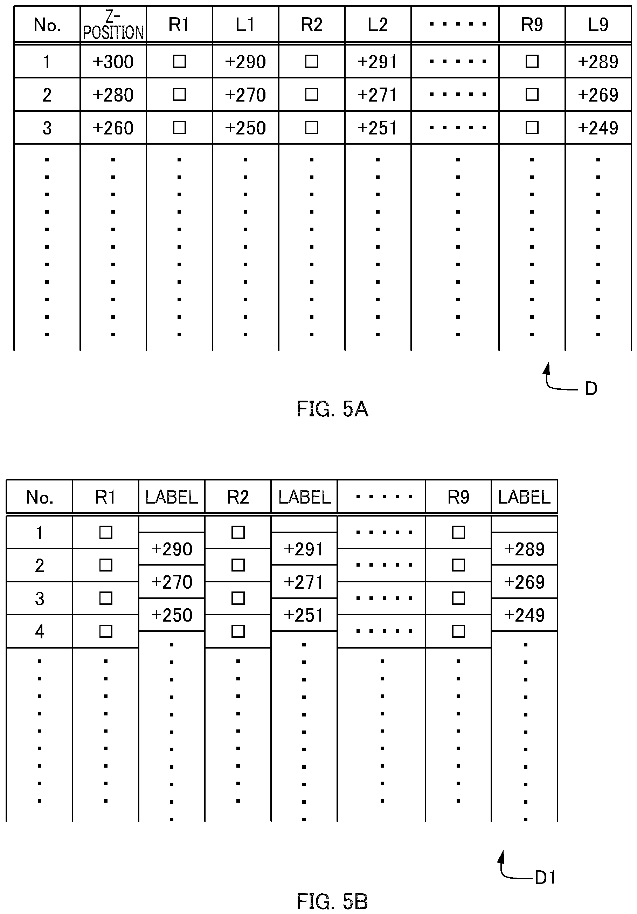

The database 114 is saved in the main storage device 102 or the auxiliary storage device 103 of the server 10. Datasets D, D1 used for machine learning are saved in the database 114 (Fig. 5).

As illustrated in Fig. 5, the datasets D, D1 each hold a plurality of combinations of images R1 to R9 and relative positions L1 to L9 associate with each other, each combination being assigned a number. Note that how to generate the datasets D, D1 and the like will be described later.

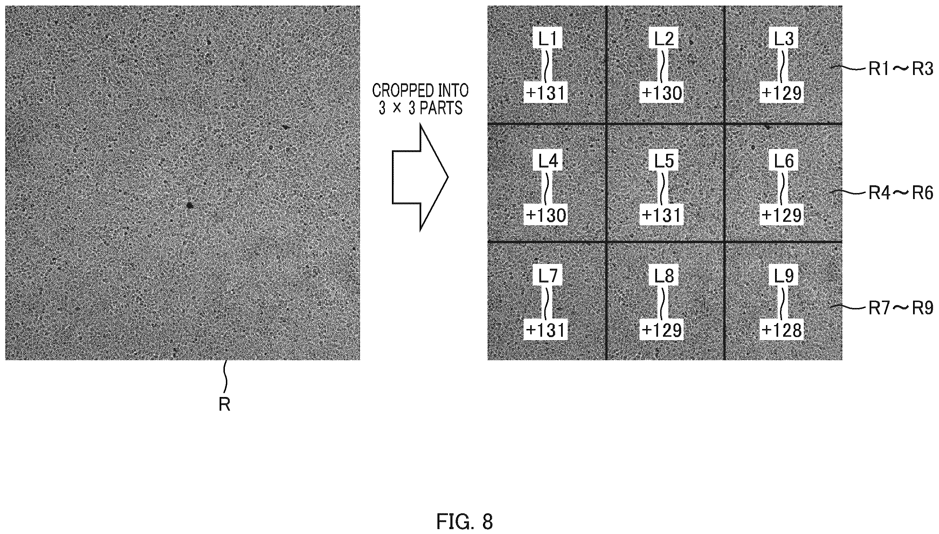

As illustrated in Fig. 8, the images R1 to R9 are each one of 3 × 3 images obtained by dividing an image R obtained by the imager 46 by performing image capturing of a biological tissue such as a cell. Also, the relative positions L1 to L9 indicate the relative positions of the focus F of the objective lens 31 in the Z-axis direction, to the in-focus position FP of a sample (the image R) (Fig. 10) in the images R1 to R9. Here, the in-focus position FP refers to a Z-position such that an image of the sample can be captured in focus when the focus F is located at that Z-position. In other words, the relative positions L1 to L9 indicate how much and in which direction, upward or downward, the sample or the objective lens 31 should be moved in order for an image of the sample to be captured in focus. The in-focus positions FP and the relative positions L1 to L9 are identified based on a signal indicating the Z-position of the objective lens 31.

The server 10 also includes, in addition to the functions described above, functions such as an operating system, a file system, a device driver, and a DBMS (DataBase Management System).

The management part 120 performs processing executed by the server 10, such as obtainment and management of images. Functions of the management part 120 are implemented when the processor 101 of the server 10 reads and executes programs stored in the main storage device 102 or the auxiliary storage device 103 of the server 10. The management part 120 includes a learner 116.

The learner 116 can learn features of an input image. The learner 116 builds a neural network that, in response to an input image, outputs an estimated result of the relative position of the focus F of the objective lens 31 to the in-focus position FP. The neural network is, for example, a DCNN (Deep Convolutional Neural Network).

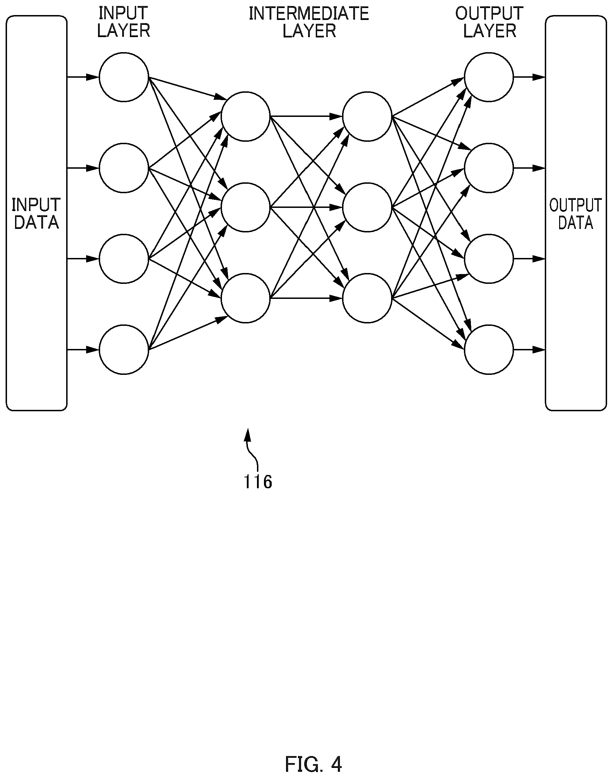

The learner 116 has an input layer that receives input of an image, an output layer that outputs an estimation result for an element of note, and an intermediate layer that extracts features of the input image (Fig. 4). The input layer, the output layer, and the intermediate layer each include nodes (denoted by white dots in Fig. 4), and the nodes in each layer are coupled by edges (denoted by arrows in Fig. 4). Note that the configuration of the learner 116 illustrated in Fig. 4 is exemplary, and the number of nodes, the number of edges, the number of intermediate layers, and the like can be changed as needed.

### [Details of Processing]

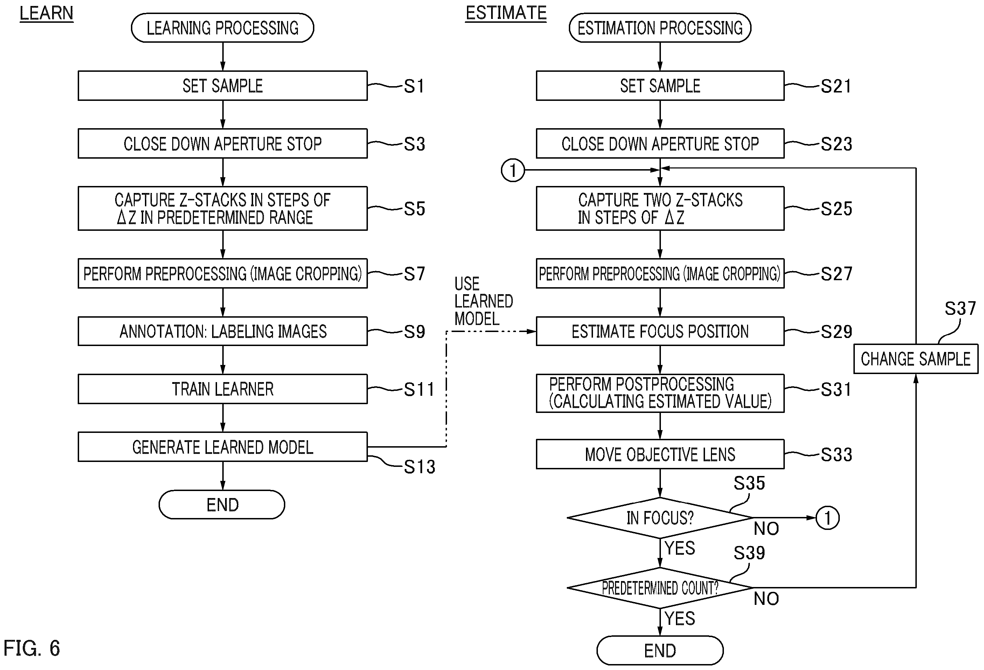

Details of processing executed in the information processing system 1 are described below. As illustrated in Fig. 6, the processing in the information processing system 1 includes two kinds of processing: learning processing and estimation processing.

### (Learning Processing)

Learning by the learner 116 is executed based on a flowchart illustrated in Fig. 6. When the server 10 receives a user instruction via the terminal 20, the processor 101 of the server 10 activates a program saved in the main storage device 102 or the auxiliary storage device 103. Further, the management part 120 executes the following processing.

Note that processing executed by the management part 120 of the server 10 may be described as being executed by the "server 10" below for simplicity.

First, the well plate P having a sample placed thereon is set in the microscope apparatus 30 (S1).

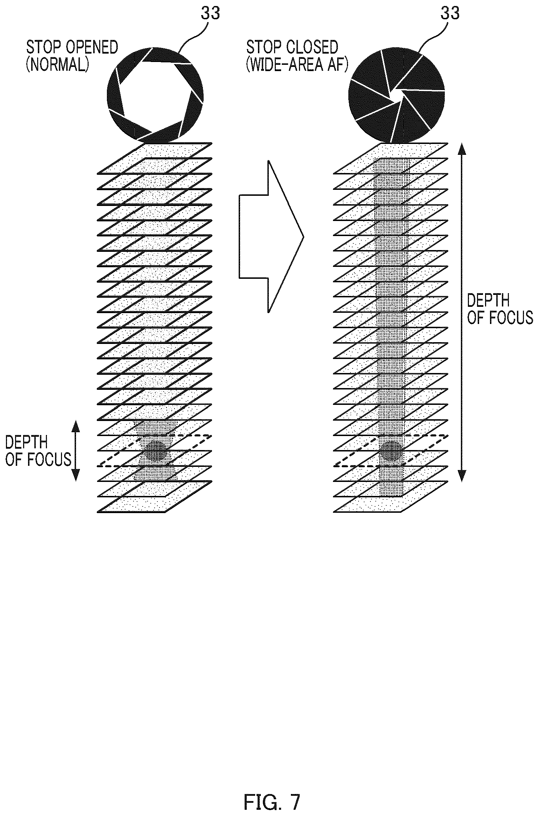

The management part 120 closes down the aperture stop 33 of the microscope apparatus 30 to an aperture size smaller than a fully open state (S3). It is especially desirable that the aperture stop be closed down to the minimum size. Also, for a brightfield image, instead of adjusting the aperture stop, a point light source may be disposed at the position of the aperture stop 33, and a small light source like a point light source may be used. For an image other than a brightfield image, e.g., a fluorescence image, a pupil stop on the detection lens side may be closed down. The pupil stop is desirably at a position conjugate to the aperture stop. Alternatively, a stop disposed at the position of an exit pupil may be used instead of adjustment of the apertures stop. Closing down the aperture stop 33 extends the depth of focus of the objective lens 31 and increases the range of the Z-position where an image of a sample can be clearly captured (Fig. 7). It also increases the amount of change in contrast with respect to a change in the Z-position of the focus F. Thus, it is easier to keep track of the distance between the focus F and the in-focus position FP of the sample.

Further, the management part 120 causes the microscope apparatus 30 to capture Z-stacks of the sample (S5). In this processing, the microscope apparatus 30 performs image capturing of the sample a plurality of times while shifting the Z-position of the objective lens 31 in increments of ΔZ within a predetermined range and thereby obtains a plurality of images R. The range within which image capturing of the sample is performed can be set by a user, and may be, as an example, a Z-position range which is ±300 micrometers (µm) from a reference position. The amount of movement ΔZ of the objective lens 31 is +20 um in an example described here and includes information on the direction in which the objective lens 31 is moved and the amount by which the objective lens 31 is moved. Note that ΔZ is not limited to +20 um and may be set to any value such as -2 um or +10 µm.

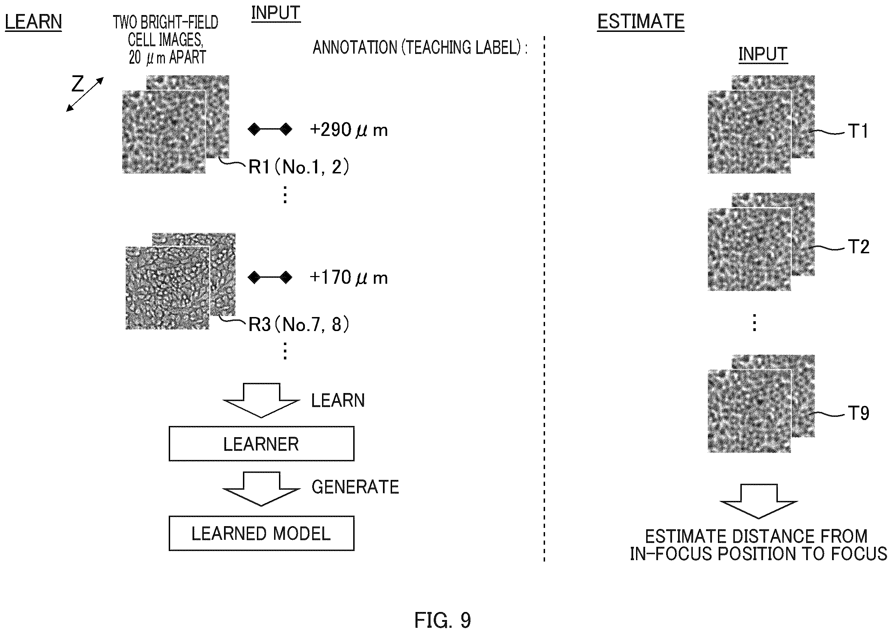

Once the image capturing is completed, the management part 120 performs preprocessing on the plurality of images R obtained by the image capturing (S7). In the preprocessing, each of the images R is divided into nine parts, generating nine images R1 to R9 (Fig. 8). The management part 120 analyzes the contrast of the images R1 to R9 obtained by the image capturing of the sample and calculates, for each of the images R1 to R9, the relative position L1 to L9 of the focus F to the in-focus position FP of the image R in the Z-axis direction. The in-focus position FP is obtained by calculation of where the Z-position of the focus F is when an image with the minimum contrast is captured. As illustrated in Figs. 5, 9, and the like, the relative positions L1 to L9 are each expressed as a numerical value of a distance in the Z-direction assigned a ± sign indicating upward or downward.

The images R1 to R9 are associated with the relative positions L1 to L9, respectively, and saved as the dataset D (S9, Fig. 5).

In Step S9, the management part 120 trains the learner 116 using the data obtained in Step S9 as teaching data (S11). To be more specific, for each of the images R1 to R9, the management part 120 extracts two consecutive images in the order of image capturing (indicated in the dataset D as No.) and saves them with a label which is the relative positions L1 to L9 corresponding to these two images (Fig. 5B, the dataset D1). In other words, for example, each two images (R1 to R9) from the respective captured images R of No. 1 and No. 2 captured at Z-positions different from each other by ΔZ and representing the same position on the sample are formed into a pair. As a label given to each pair of the images R1 to R9, the larger or smaller one of the relative positions associated with the respective two images is always selected.

Note that in this example, a relative position with the larger value is always selected as a label. As illustrated in the dataset D and the dataset D1 in Fig. 5, the value of the relative position L1 of No. 1 is assigned as a label to the pair of images R1 of No. 1 and No. 2, and the value of the relative position L1 of No. 2 is assigned as the label for the pair of images R1 of No. 2 and No. 3.

Two images and their associated label saved in the dataset D1 are both inputted to the learner 116 as a combination. As illustrated in Fig. 9, for each of the images R1 to R9, the management part 120 extracts two images from No. 1 and No. 2, and sequentially inputs the images along with their label to the learner 116. Next, for each of the images R1 to R9, the management part 120 extracts two images from No. 2 and No. 3 and sequentially input the images along with their label to the learner 116. In this way, the management part 120 teaches the learner 116 all the combinations of images and labels obtained.

As a result of the learning processing, the learner 116 functions as a learned model configured to estimate, in response to an input image, the position (the direction of movement and the amount of movement) of the focus F relative to the in-focus position FP of the sample displayed (S13).

### (Estimation Processing)

Using the learned learner 116 generated by the learning processing enables the position of the focus F to be estimated in a short period of time and enables the focus F to be aligned speedily with the in-focus position FP of the sample. An example of estimation processing using the learned learner 116 is described below using a flowchart in Fig. 6.

First, the well plate P on which a sample is placed inside a well W1 is set in the microscope apparatus 30 (S21). Note that the sample used for the estimation processing is not limited to the sample used in the learning processing.

The management part 120 closes down the aperture stop 33 of the microscope apparatus 30 to a small aperture size (S23). It is especially desirable that the aperture stop 33 be closed down to the minimum aperture size. Also, for a brightfield image, a small light source like a point light source may be used instead of the adjustment of the aperture stop. For an image other than a brightfield image, e.g., a fluorescence image, a pupil stop on the detection lens side may be closed down. Closing down the aperture stop 33 extends the depth of focus and makes it easier to keep track of the distance between the focus F and the in-focus position FP.

In Step S23, initialization is performed. The microscope apparatus 30 identifies the lower surface of the well W1 having the sample therein by applying PFS light and moves the stage 32 so that the focus F may be located at the upper surface of the bottom portion of the well W1 (Fig. 10).

Next, the management part 120 causes the microscope apparatus 30 to capture an image of the sample (S25). After the first image capturing of the sample, the microscope apparatus 30 moves the objective lens 31 by ΔZ and executes the second image capturing. From the microscope apparatus 30, the management part 120 obtains two images Q1, Q2 obtained by the image capturing.

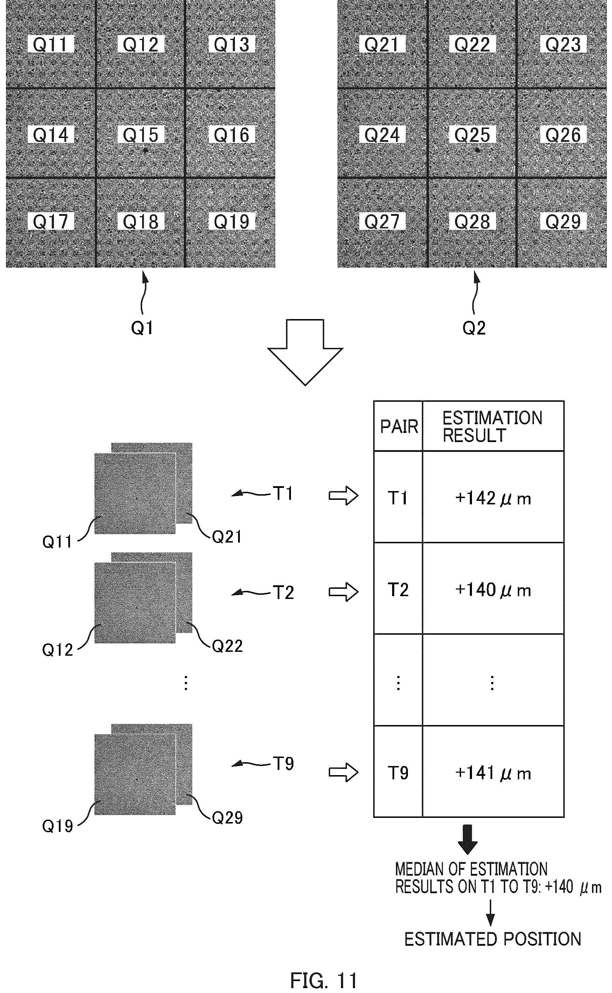

After the image capturing is completed, the management part 120 performs preprocessing on the images Q1, Q2 (S27). In the preprocessing, the images Q1, Q2 are each divided into nine parts, and images Q11 to Q19 and images Q21 to Q22 are generated (Fig. 11).

In Step S29, the management part 120 inputs the images Q11 to Q19, Q21 to Q22 to the learner 116 to have the learner 116 estimate the position (the direction of movement and the amount of movement) of the focus F relative to the in-focus position FP. To be more specific, as illustrated in Fig. 11, the management part 120 creates, from the 18 images Q11 to Q19, and Q21 to Q22, combinations of two images at the same location of the sample. Namely, a pair of the images Q11 and Q21, a pair of images Q12 and Q22, ..., and a pair of images Q19 and Q29 are created; and they are denoted as combinations T1 to T9. The management part 120 sequentially inputs the combinations T1 to T9 to the learner 116 (Figs. 9, 11).

For each of the combinations T1 to T9, the learner 116 estimates and outputs the relative position of the focus F to the in-focus position FP of the sample. Note that in this example, in each of the combinations T1 to T9, between the two images forming the combination, the estimation result on the image with the larger estimated value is outputted. This is because in the learning processing, the relative position L1 to L9 used as a label for each pair of the images R1 to R9 was one with the larger value.

The management part 120 calculates a representative value of the estimation results on the combinations T1 to T9 and outputs it as an estimated position (S31). As an example, a median is used as the representative value of the estimated positions (Fig. 11). Note that instead of a median, other mathematical processing, such as an average value, may be used for the calculation of the representative value.

Based on the estimated position (the direction of movement and the amount of movement) obtained as a result of the estimation processing, the management part 120 moves the objective lens 31 of the microscope apparatus 30 to change the position of the focus F so that the focus F may be aligned with the in-focus position FP (S33). Note that the information on the estimated position obtained as a result of the estimation processing may be only the direction of movement, and control may be performed to stop moving the objective lens 31 once the objective lens 31 reaches the in-focus position.

If the focus F does not seem to be on the sample (S33: NO), the management part 120 brings the processing back to Step S25 to close down the aperture stop 33 more and redo the processing from S25.

If the position of the focus F is aligned with the in-focus position FP (S35: YES), the management part 120 changes the sample on which to perform the image capturing and repeats the estimation processing (S39: NO). For example, if the sample used in the estimation processing is a sample in the well W1, the microscope apparatus 30 moves the stage 32 to change the target of the estimation processing to the sample in the well W2 (Fig. 10), and repeats the processing from Step S25 (S37).

### <Advantageous Effects>

The focus adjustment method of the embodiment described above includes: obtainment processing (S25) to obtain microscopic images R (corresponding to a set of first microscopic images) by using the microscope apparatus 30 including the objective lens 31 to perform image capturing of a sample (corresponding to a first subject) a plurality of times while changing the position of the objective lens 31 at certain intervals, using an aperture such as the aperture stop 33 (corresponding to the stop in the present invention) closed down to a small size or using a point light source; processing (S27 to S31, corresponding to the estimation processing) to have the learned learner 116 configured to estimate the position of the focus F of the objective lens 31 relative to the in-focus position of the sample estimate the position of the focus F relative to the in-focus position FP as an estimated position by inputting the microscopic images R to the learned learner 116; and processing (S33) to move the focus F relative to the sample based on the estimated position.

By executing the processing described above, the microscope apparatus 30 can bring the sample into focus speedily and capture an in-focus image.

In the embodiment described above, the microscope apparatus 30 executes the obtainment processing (S15) and the estimation processing (S31) after bringing the size of the aperture stop 33 to the minimum size. Also, if the estimation processing (S31) is improper and the sample is out of focus, the processing is executed again (S33: NO). The aperture stop 33 is preferably located closer to the light source than the sample.

Minimizing the stop size extends the depth of focus of the objective lens 31 and increases the range of the Z-position of the focus F where a clear image of the sample can be captured. It also increases the amount of change in contrast with respect to a change in the Z-position of the focus F. This makes it easier to keep track of the distance between the focus F and the in-focus position FP of the sample.

In the embodiment described above, the estimation processing (S27 to S31) includes: processing (S27) to generate a plurality of images Q11 to Q19, Q21 to Q29 (corresponding to partial images) by dividing the microscopic images Q1, Q2; processing (S29) to input the images to the learner 116 to have the learner 116 estimate the position of the focus F relative to the in-focus position FP for each of the pairs T1 to T9 of the images Q11 to Q19, Q21 to Q29; and processing (S31) to set a representative value of the estimated values as an estimated position.

Dividing an image into parts and performing estimation on each of the parts as described above makes it possible to obtain an accurately estimated position.

Also, using a plurality of microscopic images for the estimation processing makes it possible to keep track of a change between the images with respect to the movement of the focus F and enables the learner 116 to accurately estimate the distance from the focus F to the in-focus position FP. Also, by keeping track of a change between the images, the learner 116 can keep track of whether the focus F moved away from the in-focus position FP or closer to the in-focus position FP when the plurality of images Q1 and Q2 were captured. This allows the learner 116 to keep track of not only the distance, but also whether the focus F is located above or below the in-focus position FP. Thus, the learner 116 can accurately estimate not only the distance, but also the relative position of the focus F to the in-focus position FP.

The embodiment described above generates the learned model by obtaining two images R (second microscopic images) by performing image capturing a plurality of times using a stop brought to a size smaller than a fully open state and changing the position of the objective lens 31 in the optical axis direction relative to the sample at a predetermined interval within a predetermined range (S5), calculating, for each of the two images R, the relative position of the focus of the objective lens 31 to the in-focus position of the sample (S9), and having the learner 116 machine-learn the teaching data D1 including a combination of two images R and their associated relative position (S11, S13).

The learned model described above is generated by performing processing to divide each of the two images R to generate a plurality of partial images R1 to R9, calculating, for each of the plurality of partial images R1 to R9, the relative position of the focus of the objective lens 31 to the in-focus position of the sample, and causing the learner 116 to machine-learn the teaching data D1 including combinations of the plurality of partial images R1 to R9 and their associated relative positions, and as to the associated relative position in each combination, between the relative positions corresponding to the plurality of partial images R1 to R9, one with the larger value or the smaller value is selected.

As described above, using images obtained through an image capturing procedure similar to that for the estimation processing as teaching data for the learner 116 makes it possible to generate a learned model that executes estimation processing with high accuracy. Also, by learning a combination of a plurality of images along with a label, the learner 116 learns, based on a change between the plurality of images, whether the focus F moved away from the in-focus position FP or closer to the in-focus position FP. As a result of the learning, the learner 116 functions as a learned model that estimates not only the distance, but also the relative position of the focus F to the in-focus position FP with high accuracy.

### <Modification>

Any method may be used to divide the images R and the images Q1, Q2, and they may be divided into any number of parts. Thus, they are not limited to being divided into nine parts like in the embodiment described above, and each image may be divided into any shapes and any number of parts, such as 16 parts or 32 parts. Also, the images R and the images Q1, Q2 may be undivided and inputted to the learner 116 as they are.

In the embodiment described above, the number of images inputted to the learner 116 in the estimation processing and the learning processing is not limited to two. For example, there may be three or more input images. In this case too, a label attached to each combination may be the relative position of the focus F to the in-focus position FP in one of the plurality of input images. Also, the method of the machine learning in the embodiment described above may be regression or classification. When machine learning is performed using classification, interpolation between data is performed in postprocessing so that learning similar to the above can be performed to generate an estimation model.

The well plate P on which to place a sample does not need to be the same in the estimation processing and the learning processing. Learning processing can be performed using a plurality of types of containers for placing a sample to generate a learned model supporting containers of various shapes and materials.

In the mode in the embodiment described above, a plurality of terminals are coupled to a single server 10, and the functions described above are fulfilled. The present invention does not limit the number of servers or the number of terminals, and for example, the functions described above may be implemented only by a single apparatus. There may be even more terminals or servers. Also, the functions do not necessarily need to be implemented by the server 10 and the like, and the functions can be divided and implemented by a plurality of apparatuses. In other words, the present invention does not limit the number of controllers or apparatuses or how the functions are divided among the apparatuses.

### [Reference Signs List]

1 information processing system
10 server
20 terminal
30 microscopic apparatus

## Claims

1. A focus adjustment method comprising:
obtaining two first microscopic images by performing image capturing of a first subject using a microscope including an objective lens and using a stop brought to a size smaller than a fully open state, the image capturing being performed a plurality of times while changing a position of the objective lens relative to the first subject in an optical axis direction at a predetermined interval;
by inputting the two first microscopic images to a learned model configured to estimate a direction of movement of a focus of the objective lens relative to an in-focus position of the first subject, estimating the direction of movement; and
processing to move the focus relative to the subject based on the direction of movement.

2. The focus adjustment method according to claim 1, wherein
the stop is an aperture stop or a stop at a pupil position conjugate to an aperture stop, and
the obtaining and the estimating are executed with the stop being brought to a minimum size.

3. The focus adjustment method according to claim 1 or 2, wherein
the stop is an aperture stop for a condenser lens and has a variable stop size.

4. The focus adjustment method according to claim 3, wherein
on an optical path, the aperture stop is located closer to a light source than the first subject.

5. The focus adjustment method according to any one of claims 1 to 4, wherein
the estimating includes
generating a plurality of first partial images by dividing each image of the two first microscopic images,
inputting the plurality of first partial images to the learned model to have the learned model estimate not only the direction of movement but also an amount of movement with respect to the plurality of first partial images and estimating a position of the focus of the objective lens, and
setting, as an estimated position, a representative value of estimation results on the position of the focus about the respective plurality of first partial images of the each image.

6. The focus adjustment method according to any one of claims 1 to 5, wherein
the learned model is generated by
obtaining two second microscopic images by performing image capturing using a stop brought to a size smaller than a fully open state, the image capturing being performed a plurality of times while changing the position of the objective lens relative to a second subject in the optical axis direction at a predetermined interval within a predetermined range;
calculating, in each of the two microscopic images, a relative position of the focus of the objective lens to an in-focus position of the second subject, and
having a learner machine-learn teaching data including a combination of the two second microscopic images and the relative position associated with the two second microscopic images.

7. The focus adjustment method according to claim 6, wherein
the learned model is generated by
performing processing to generate a plurality of second partial images by dividing each image of the two second microscopic images,
calculating, in each of the plurality of second partial images, the relative position of the focus of the objective lens to the in-focus position of the second subject, and
having a learner machine-learn teaching data including the plurality of second partial images and the relative position associated with the plurality of second partial images, and
as to the relative position associated in each combination, between the relative positions corresponding to the plurality of second partial images, the relative position with a larger value or a smaller value is selected.

8. The focus adjustment method according to claim 3, wherein
in the obtaining, instead of using the aperture stop, a point light source is disposed at a position of the aperture stop to obtain the two first microscopic images.

9. A program that causes a computer to execute the focus adjustment method according to any one of claims 1 to 7.

10. An apparatus comprising a processor configured to execute the focus adjustment method according to any one of claims 1 to 8.
